# EUROPÄISCHE PATENTANMELDUNG

(11) **EP 1 691 073 A2**
(43) Veröffentlichungstag der Anmeldung: **16.08.2006**
(21) Anmeldenummer: 06002993.1
(22) Anmeldetag: 15.02.2006
(51) Int. Cl.: F03D 1/00

(54) **Flächengründung, bevorzugt aufgelöst, für Offshore-Windenergieanlage**

(30) Priorität: 15.02.2005 DE 102005006988
(71) Anmelder: ED. ZÜBLIN AG, D-70567 Stuttgart (DE)
(72) Erfinder: Weber, Klaus, Dr., 72366 Balingen (DE)

(57) **Zusammenfassung**

Die erfindungsgemäße Gründung einer Offshore-Windenergleanlage weist Gründungselemente (4) auf, deren Einhüllende im Grundriß eine Fläche umschließt. Diese flächenhafte Gründung (4) liegt auf dem Meeresboden (3) auf, bevorzugt nur über einige Füße, oder ist nur geringfügig darin versenkt. Ausgehend von dieser flächenhaften Gründung (4) erstreckt sich eine Gründungsstruktur als Unterbau (7) nach oben, auf dem der Mast (8) mit der Turbine errichtet ist. Der Mast (8) kann sich auch direkt von der flächenhaften Gründung (4) aus erheben. Der Mast (8) oder der Unterbau (7) können durch Seilabspannungen (6) stabilisiert sein.

Die flächenhafte Gründung (4) ist kein übliches Schwerkraftfundament, hat aber eine ähnliche Wirkung. Kippmomente aus dem Mast (8) werden von der flächenhaften Gründungsstruktur (4) aufgenommen und über Bodenpressung abgetragen. Die Wirkung ähnelt entfernt der bei einer überdimensionalen Stehlampe oder einem Weihnachtsbaumständer.

Eine mögliche einfache Ausführungsform besteht aus zwei ein Kreuz (4) bildenden Betongründungsbalken (1), auf deren Kreuzungspunkt sich ein Mast (8) oder Mastuntersatz (7) erhebt. Die Verbindung vom Mast (8) oder Mastuntersatz (7) zur Gründung (4) ist bevorzugt steif, kann aber auch gelenkig (5a, 5b) ausgeführt sein. In letzerem Falle ist eine Seilabspannung auf jeden Fall von Nöten.

Die Betonbalken können massiv sein, bevorzugt ist aber eine Hohlstruktur, die zur Erhöhung des Gewichtes mit Bodenmaterial (Sand, Steine) gefüllt wird. Die Gründungsbalken (1) können hierzu auch als liegendes U-Profil ausgeführt sein.

Ein Kolkschutz auf den Enden der Gründung verhindert eine Unterspülung.

## Beschreibung

### Technisches Gebiet

Die Erfindung betrifft die Gründung von Offshore-Windenergieaniagen.

### Stand der Technik

Es ist bekannt, als Gründung für Offshore-Windenergieanlagen in den Boden eingerammte Monopiles, mit Pfählen verankerte Tripods oder Schwerkraftfundamente einzusetzen.
Bei den Schwerkraftfundamenten handelt es sich um häuserblockgroße sandgefüllte Betonhohlkästen, die auf dem Meeresboden auffliegen oder nur geringfügig darin versenkt sind, und auf denen der Mast der Windenergieanlage errichtet ist.
Schwerkraftfundarnente haben den Vorteil, ohne große Geräuschentwicklung auf dem Meeresboden abgesetzt werden zu können und damit naturschützerische Vorgaben erfüllen zu können. Schweinswale und andere Meerestiere werden durch den Lärm des Einrammens bei alternativen Gründungsverfahren nämlich hörgeschädigt und damit orientierungslos.
Zudem sollten Gründungen auch einfach rückbaubar sein, um neuen Technologien (z.B. größere Anlagen) bei der Windenergiegewinnung nicht hinderlich zu sein.

### Aufgabe der Erfindung

Aufgabe der Erfindung ist es, eine Gründung für eine Offshore-Winderiergieanlage anzugeben, die kostengünstig ist, ein günstiges Tragverhalten hat, ohne große Lärmbelästigung vor Ort installiert werden kann und darüber hinaus auch noch auf einfache Weise rückbaubar oder umsetzfähig ist.

### Darstellung der Erfindung

Die Aufgabe wird durch die im Kennzeichen des Anspruchs 1 angegebenen Merkmale gelöst.
Wesentliches Merkmal der Erfindung ist eine flächige Gründung (4), die auf dem Meeresboden (3) aufliegt oder nur geringfügig darin versenkt ist, und auf der sich ein Unterbau (7) für den Mast (8) der Windenergieanlage, oder der Mast (8) der Windenergieanlage selbst, erhebt. Die Gründung (4) wirkt flächig, vereinfacht gesagt also ähnlich wie ein Fuß einer Stehlampe oder eines Weihnachtsbaumes, bzw. wie der Untersatz eines Drehstuhles. Hierzu beträgt das Verhältnis von Höhe zu Durchmesser ein Viertel oder weniger, bevorzugt ein Fünftel oder weniger.
Bevorzugt ist die flächige Gründung (4) auch noch aufgelöst und die Einhüllende der aufgelösten Gründungsetemente bildet eine Gründungsfläche mit ähnlicher Wirkung (aber größerem Durchmesser) wie ein durchgehendes, flächiges Schwerkraftfundament,
Aufgelöst bedeutet, die flächenhafte Fründung weist Durchbrüche/Leerstellen (11) auf: Teile der aufgespannten Fläche sind einfach weggelassen, wie z.B. auch bei dem fünfarmigen Stern als "Gründung" eines Drehstuhles oder dem dreibeinigen Fuß eines Chemielaborstativs. Bevorzugt machen diese Leerstellen (11) ungefähr ein Drittel oder mehr der durch die Gründungselemente aufgespannten Fläche aus.

Kippmomente des Mastes (7 oder 8) und Vertikalkräfte werden von der, bevorzugt aufgelösten, flächigen Gründung (4) aufgenommen und über Bodenpressungen an den Meeresboden (3) weitergegeben.
Diese Weitergabe der Bodenpressungen erfolgt entweder flächenhaft bevorzugt aber über Stützfüße, z.B in Form von Lastplatten, am Rande der flächenhaften Gründung, so daß der Mittelteil der Gründung, über der sich der Mast erhebt, hohl liegt.
Eine Ausführung der Erfindung sieht vor, den Unterbau (7) des Mastes (8) als Maststück auszuführen und dieses gelenkig (5a, 5b) auf der Gründung (4) zu befestigen. Die Stabilität des Mastes (7, 8) wird dann durch Seilabspannungen (6) vom Mast (8) oder vom Mastuntersatz (7) zur flächenmäßigen Gründung (4) erreicht.
Diese Ausführung gestattet es, einen Mast (7, 8) jederzeit in seiner Ausrichtung nachzujustieren, falls er durch unplanmäßige Ereignisse eine Fehlneigung erhalten sollte.
Bevorzugt ist allerdings eine steife Verbindung zwischen Gründung (4) und Mastuntersatz (7) oder Mast (8).
Die Betonstruktur des Mastuntersatzes oder Mastes (7, 8) läßt sich dabei schwächer ausführen (optimiertes Bruchverhalten), wenn der Übergang der Gründung (4) zum Mastuntersaiz/Mast (7, 8) nicht als scharfe Ecke mit ungefähr 90° Winkel erfolgt, sondem kontinuierlicher, ähnlich wie beim Ast an einem Baum. Sehr nahe am Optimum ist dabei ein Übergang, der zur Gründungsebene einen Winkel von 45° aufweist und dann kontinuierlich in den Mast übergeht. Aus schalungstechnischen Gründen kann man diesen übergang zu zwei 45° Winkeln vereinfachen, einen zur Gründungsebene hin, einen zum Mastuntersatz/Mast (7, 8) hin.
Die flächenmäßige Gründung (4) besteht in einem bevorzugten Fall aus einem Betonkreuz (4), an dessen Kreuzungspunkt sich der Unter baulMastuntersatz (7), oder der Mast (8) selbst, erhebt. Statt vier radial vom Mast nach außen weisenden Balken sind aber auch 3 (allerdings längere), 5 oder mehr, oder auch ein äußerer Ring möglich, zu dem hin sich vom Mastuntersatz/Mast (7, 8) aus Streben erstrecken.
Das einfache Betonkreuz (4) besteht zum Beispiel aus zwei langen Betonbalken (1), die in einer Variante erst vor Ort übereinandergelegt werden. Hierzu weisen die Betonbalken (1) ungefähr in ihrer Mitte entsprechende Ausnehmungen (2) auf, so daß sie übereinandergelegt beide den Meeresboden (3) berühren.
Eine andere bevorzugte Variante sieht vor, die Betonkreuze (4) als Ganzes vorzufertigen und als ein Element auf dem Meeresboden (3) abzusetzen,
Die Betonbalken (1) sind bevorzugt als Hohlprofile, U-Profile bzw. als wannenförmige Profile ausgeführt, die nach Montage an Ort und Stelle mit Ballastmaterial (z. B. Sand, Steinen) gefüllt werden können. Durch diese Erhöhung der Masse der flächenmäßigen Gründung (4) kann die von der Gründung (4) aufgespannte Fläche kleiner gehalten werden, das heißt, die Betonbalken (1) können kürzer und damit kostengünstiger ausgelegt werden.
Bevorzugt ist allerdings, die Füllung schon bereits an Land bzw. am Kai vorzunehmen, und diese Strukturen dann mit Spezial schiffen vor Ort zu fahren und dort abzusenken. Dazu kann dann auch schon der gesamte Mast (8) der Windenergieanlage montiert sein, bevorzugt samt Gondel.
Der Durchmesser der von der flächenmäßigen Gründung (4) aufgespannten Fläche beträgt üblicherweise weniger als die Hälfte der Höhe der Windener gieanlage.
Die flächenmäßige Gründung (4) kann zusätzlich durch kurze Verankerungen im Meeresboden stabilisiert werden. Diese Verankerungen oder seitliche Schürzen oder andere vom Betonbalken nach unten ragende Fortsätze (9) verhindern ein horizontales Gleiten auf dem Meeresboden (3),
Der mit Abstand wesentliche Anteil (mehr als etwa 80 %) der Kippsicherung wird jedoch durch die Bodenpressung der Flächengründung (4) und nicht durch eventuelle zusätzliche Verankerungen im Boden erzielt.
Bevorzugt sind die Fortsätze (9) so stark vergrößert und zu Stützfüßen (10) umgebildet, daß der mittlere Teil der flächenhaften Gründung (4) nicht auf dem Meeresboden (3) aufsetzt, wodurch Wackelbewegungen bei nicht ebenem Boden (3) vermieden werden.
Die Bauteilabmessungen der erfindungsgemäßen Gründung (4) sind geringer als die eines üblichen Schwerkraftfundamentes, Die Kosten sind gegenüber einem in der Wirkung gleichwertigen Fundament nach Stand der Technik ebenfalls geringer.
Typische ungefähre Abmessungen eines Betonkreuzes und Mastuntersatzes (7) einer erfindungsgemäßen flächenhaften Gründung (4) weisen bei einer Wassertiefe von 15 bis 35 Metern einen Durchmesser von 25 bis 35 Metern auf. Die Breite eines Betonbalkens beträgt ungefähr 5 Meter, seine Höhe ungefähr 6 Meter.
Die Wandstärke des als Hohlprofil ausgelegten Betonkreuzes beträgt ungefähr 0,5 Meter. Am Ende der Betonbalken (1) befinden sich Stützfüße (10) als Betonlastplatten von ungefähr 7 auf 7 Metern und einer Stärke von ungefähr 0,5 Metern. Der als Betonrohr ausgeführte Mastuntersatz (7) hat im unteren Bereich eine Wandstärke von ungefähr 0,9 Meter, oberhalb des Wasserspiegels (ungefähr 15 bis 20 Meter), wo der Mast der Windenergieanlage angeflanscht wird, noch ungefähr 0,6 Meter.
Variationen zu diesen Richtwerten sind möglich und tragen dann den Bedingungen vor Ort Rechnung. Sowohl die Betonbalken (1), als auch der Mastuntersatz (7) bestehen aus vorgespanntem Beton.
Die Betonbalken (1) sind eben oder zum Mittelpunkt der Gründung (4) hin leicht (z,B, ungefähr 2°) aufwärts geneigt.

Die Figuren zeigen beispielhaft schematische Ausführungsformen mit einem Betonkreuz (4) als Gründung.

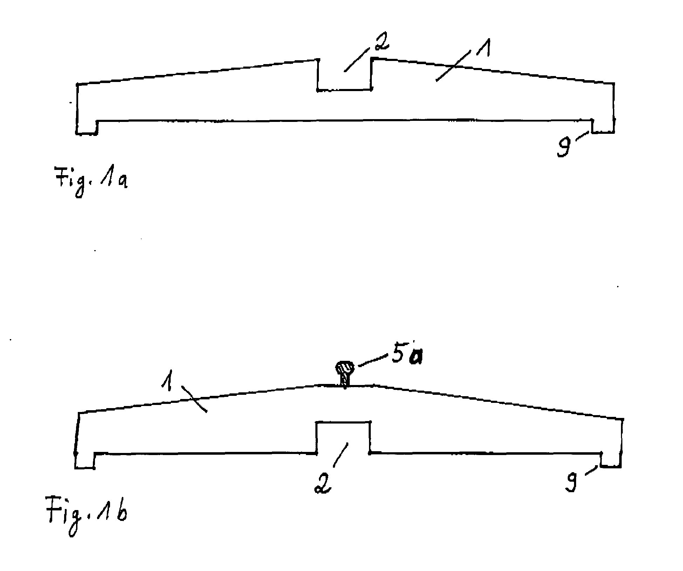

Fig. 1a und Fig.1 b zeigen zwei Balken (1) eines Betonkreuzes (4) mit paßgenauen Ausnehmungen (2) zum Übereinanderlegen. Die Betonbalken (1) weisen an ihren Enden nach unten ragende Fortsätze (9) auf, die sich in den Meeresboden (3) bohren und ein horizontales Gleiten des Kreuzes (4) verhindern.

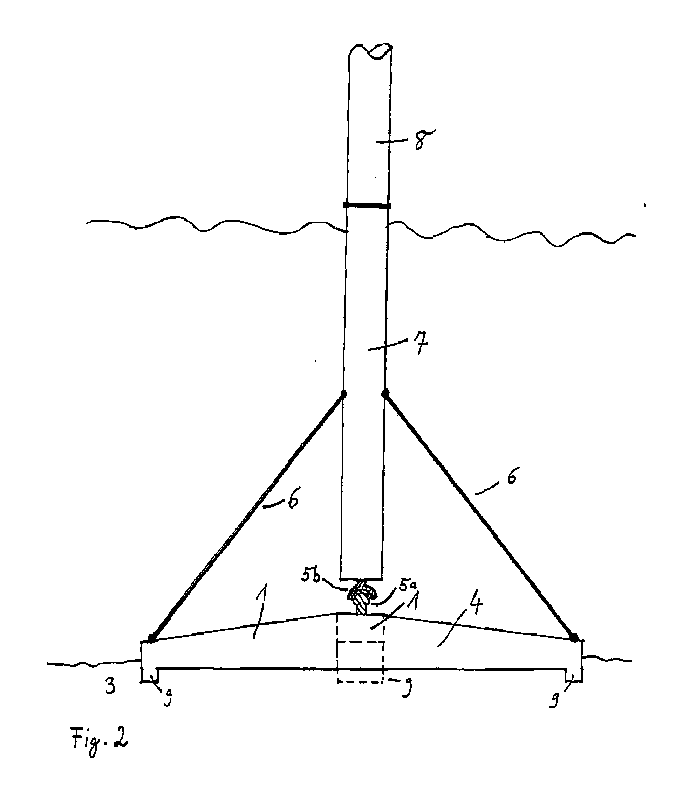

Fig. 2 zeigt im Schnitt ein Betonkreuz (4), auf dem gelenkig (5a, 5b) und mit Seilabspannung (6) zu den Enden der Betonbalken (1) ein Unterbau/Mastuntersatz (7) errichtet ist, auf dem der Mast (8) der Windenergieanlage befestigt ist.

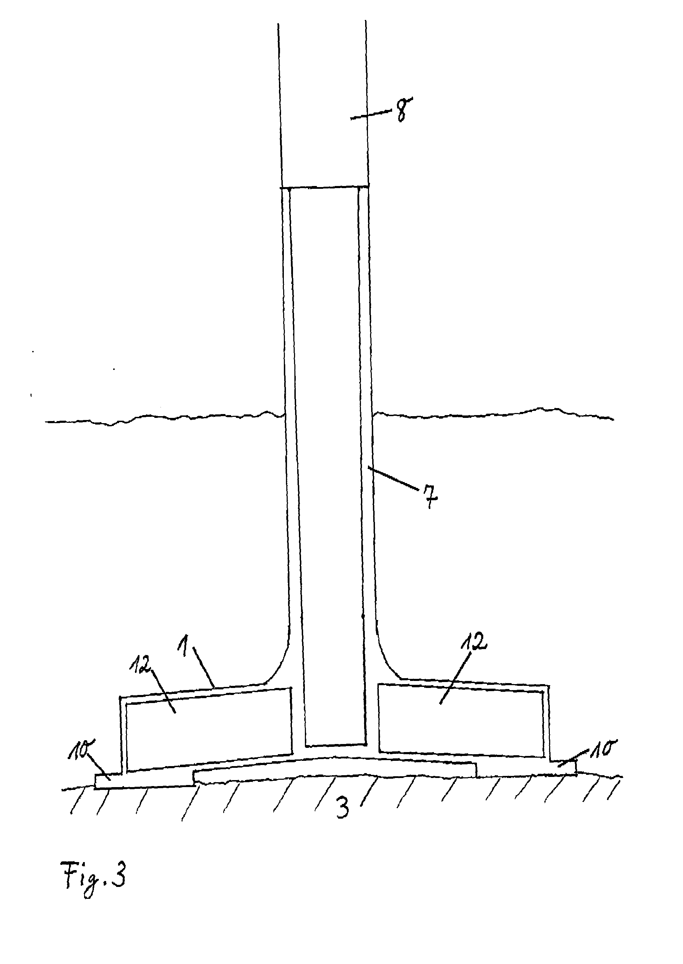

Fig. 3 zeigt im Schnitt eine Windenergieanlage mit erfindungsgemäßer flächenmäßiger Gründung (4) durch ein Betonkreuz, welches (bevorzugte Ausführung) steif mit dem Mastuntersatz/Mast (7, 8) verbunden ist, Das Betonkreuz (4) sitzt mit Stützfüßen (10) auf dem Meeresboden (3) auf.

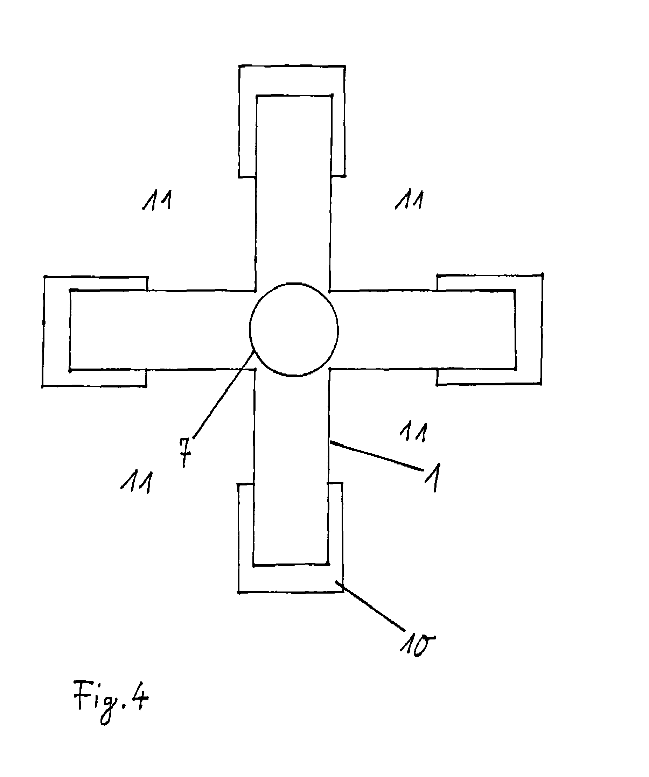

Fig. 4 zeigt eine flächenmäßige Gründung (4) in Form eines vierästigen Betonkreuzes mit Stützfüßen (10) in Aufsicht.

### Bezugszeichenliste

- 1: Betonbalken, einzeln oder auch Teil eines Gesamtkreuzes
- 2: Ausnehmung
- 3: Meeresboden
- 4: flächenhafte Gründung
- 5a: Gelenkunterteil
- 5b: Gelerikoberteil
- 6: Seilabspannung
- 7: Unterbau/Mastuntersatz
- 8: Mast der Windenergieanlage
- 9: Fortsatz als Gleitschutz
- 14: Stutzfuß
- 11: Leerstelle in der flächenmäßigen Gründung
- 12: Ballast

## Patentansprüche

1. Gründung für eine Offshore-Windenergleanlage,
**dadurch gekennzeichnet, daß** es sich um eine flächenmäßige Gründung (4) handelt, die Kippmomente des Mastes (7, 8) als Flächendruck an den Meeresboden (3) überträgt, wobei die Höhe der Gründung (4) im Verhältnis zu ihrer horizontalen Erstreckung entlang des Meeresbodens (3) maximal ein Viertel beträgt.

2. Flächenmäßige Gründung (4) nach Anspruch 1,
**dadurch gekennzeichnet, daß** die Höhe der Gründung (4) im Verhältnis zu ihrer horizontalen Erstreckung entlang des Meeresbodens (3) maximal ein Fünftel beträgt.

3. Flächenmäßige Gründung (4) nach mindestens einem der Ansprüche 1 und 2,
**dadurch gekennzeichnet, daß** auf der Gründung (4) gelenkig (5a, 5b) ein Unterbau (7) oder der Mast (8) der Windenergieanlage selber errichtet ist, der durch bevorzugt nachjustierbare, von der Gründung (4) zum Unterbau (7) oder Mast (8) verlaufende Seilabspannungen (6) in seiner Lage stabilisiert ist.

4. Flächenmäßige Gründung (4) nach mindestens einem der Ansprüche 1 und 2,
**dadurch gekennzeichnet, daß** auf der Gründung (4) und starr mit ihr verbunden ein Unterbau (7) oder der Mast (8) der Windenergieanlage selber errichtet ist.

5. Flächenmäßige Gründung (4) nach mindestens einem der Ansprüche 1 bis 4,
**dadurch gekennzeichnet, dass** die flächenmäßige Gründung (4) Leerstellen (11) aufweist, die mindestens ein Drittel des Grundrisses der durch die horizontalen Gründungselemente aufgespannten Fläche ausmachen.

6. Flächenmäßige Gründung (4) nach mindestens einem der Ansprüche 1 bis 5,
**dadurch gekennzeichnet, daß** die flächenmäßige Gründung (4) als vorgefertigtes oder aus Einzelteilen (1) zusammengesetztes Betonkreuz ausgeführt ist.

7. Flächenmäßige Gründung (4) nach Anspruch 6,
**dadurch gekennzeichnet, daß** sich der Unterbau (7) des Mastes (8) oder der Mast (8) selbst am Kreuzungspunkt des Betonkreuzes (4) erhebt.

8. Flächenmäßige Gründung (4) nach mindestens einem der Ansprüche 6 und 7,
**dadurch gekennzeichnet, daß** das Betonkreuz aus zwei sich kreuzenden Betonbalken (1) besteht, die ungefähr in ihrer Mitte Ausnehmungen (2) aufweisen, so daß die beiden Betonbalken (1) im kreuzweise übereinandergelegten Zustand beide den Meeresboden (3) berühren.

9. Flächenmäßige Gründung (4) nach mindestens einem der Ansprüche 6 bis 8,
**dadurch gekennzeichnet, daß** das Betonkreuz bzw. die Betonbalken (1) als Hohlprofile, U-förmig oder in Wannenform ausgeführt sind und mit Ballastmaterial befüllbar sind.

10. Flächenmäßige Gründung (4) nach mindestens einem der Ansprüche 1 bis 9,
**dadurch gekennzeichnet, daß** die Gründung (4) an ihrem Umfang oder, im Falle von Betonbalken (1) an deren Ende, Stützfüße (10) aufweist, die die Gründung (4) in ihrem zentralen Bereich, über dem sich der Mastuntersatz/Mast (7, 8) befindet, vom Meeresboden (3) abheben.

11. Flächenmäßige Gründung (4) nach mindestens einem der Ansprüche 1 bis 10,
**dadurch gekennzeichnet, daß** sie zusätzlich mit Verankerungen am Meeresboden (3) befestigt ist, oder seitliche Schürzen oder nach unten ragenden Fortsätze (9) aufweist, die in den Meeresboden (3) eindringen und die im wesentlichen nur Horizontaikräfte aufnehmen müssen.
